# EUROPÄISCHE PATENTSCHRIFT

(11) **EP 0 679 134 B1**
(45) Veröffentlichungstag und Bekanntmachung des Hinweises auf die Patenterteilung: **02.07.1997**
(21) Anmeldenummer: 93902031.9
(22) Anmeldetag: 18.01.1993
(51) Int. Cl.: B64C 15/02, F02K 1/00

(54) **RADIAL-VIER-BLATT-SCHUB-VEKTOR**
RADIAL FOUR-BLADE THRUST VECTOR
TUYERE RADIALE A QUATRE PALES

(43) Veröffentlichungstag der Anmeldung: 02.11.1995
(73) Patentinhaber: KOLBECK, Franz-Xaver, D-85764 Oberschleissheim (DE)
(72) Erfinder: KOLBECK, Franz-Xaver, D-85764 Oberschleissheim (DE)
(74) Vertreter: Bartelds, Erik
(86) Internationale Anmeldenummer: DE9300030
(87) Internationale Veröffentlichungsnummer: WO9415830

(56) Entgegenhaltungen:
- US-A- 3 020 714
- AVIATION WEEK AND SPACE TECHNOLOGY Bd. 134, Nr. 10, 11. M rz 1991, NEW YORK US Seiten 38 - 41 DORNHEIM M. 'X-31 FLIGHT TESTS TO EXPLORE COMBAT AGILITY TO 70 DEG. AOA' s

## Beschreibung

Radialschubvektor für Düsenjäger, mit ein oder zwei Triebwerken worin jeweils vier Strahlruder vorgesehen sind, wobei jedes Strahlruder (4) elektromechanisch um eine Achse winkelverstellbar ist, die senkrecht zur ungehinderten Ausströmungsrichtung der Triebwerksgase ausgerichtet ist, wodurch jedes Strahlruder (4) bei entsprechender Winkelstellung zur Umlenkung der aus dem Triebwerk ausströmenden Gase dient, dadurch gekennzeichnet, daß die Winkelverstellbare Befestigung jedes Strahlruders gegenüber dem Triebwerk über eine ringförmigen Trommel (2) erfolgt, die im Anschluß am Auslaß des Triebwerks angeordnet und gegenüber dem Triebwerk elektromagnetisch um eine Achse drehbar ist, die im wesentlichen mit der Längsachse des Auslasses übereinstimmt.

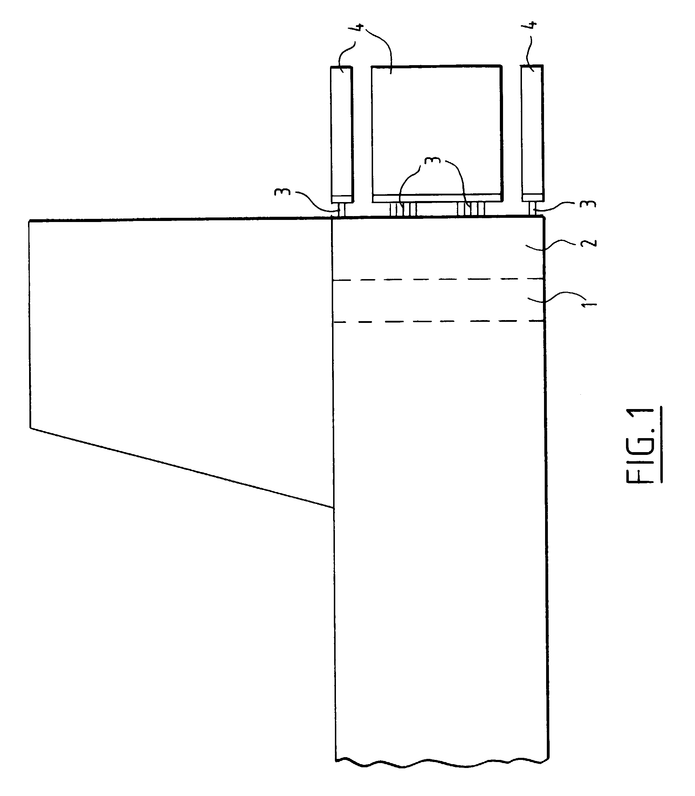

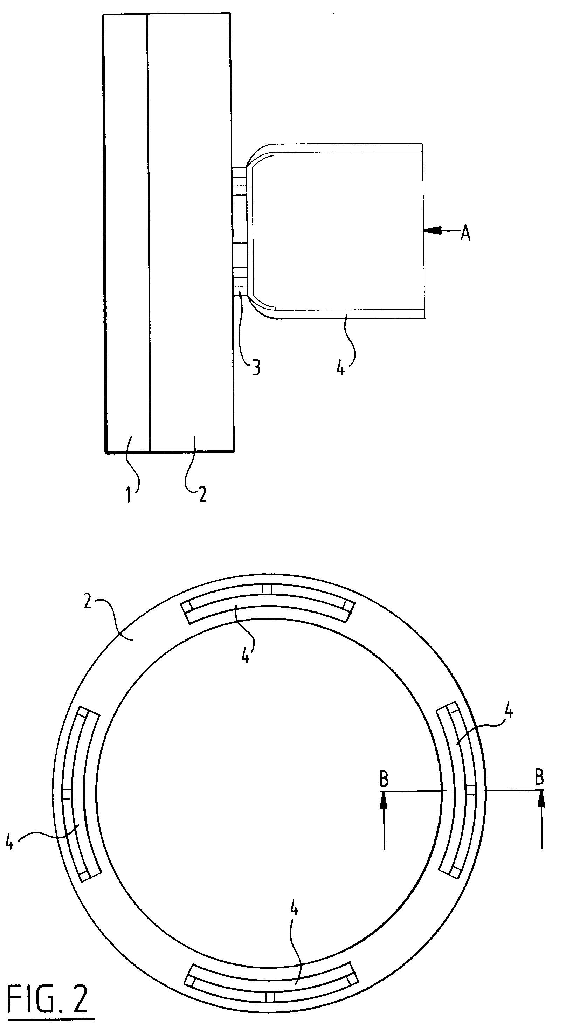

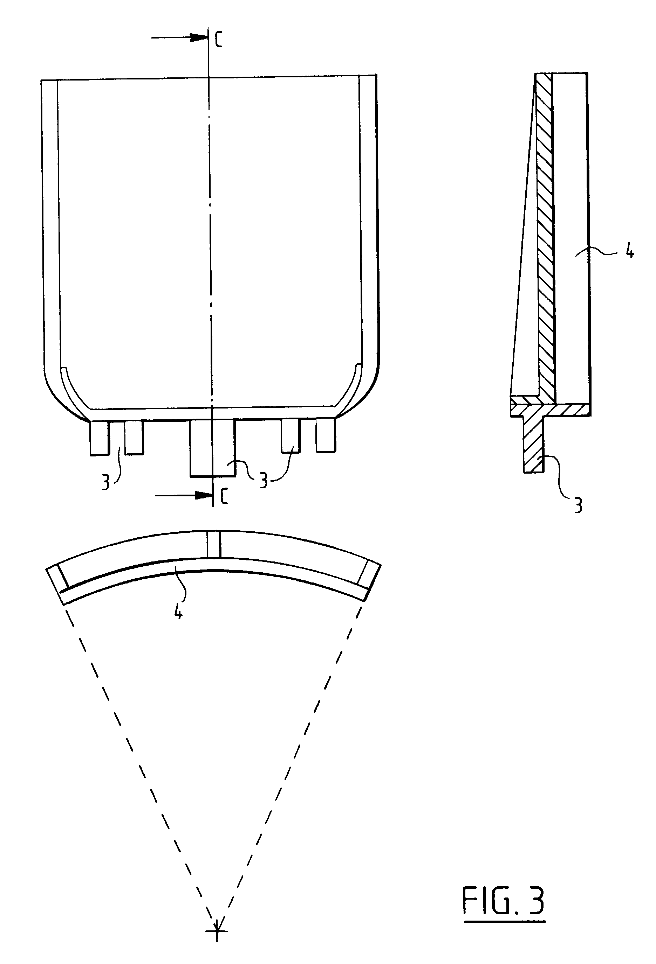

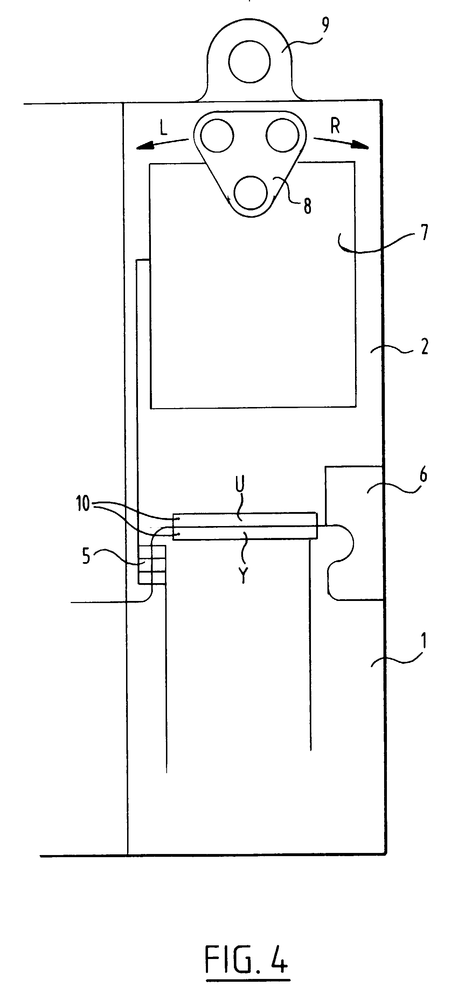

Wenn Schubumkehr und Landegeschwindigkeit übereinstimmen, so kann das Objekt sogar landen. Sollte ein Strahlruder (4) oder Fig. 3 verlorengehen, ist die Manövierbarkeit: nicht eingeschränkt. Fig. 1 zeigt die komplett montierte Ansicht des Schubvektors Fig. 2. Fig. 2 ziegt die montierte Ansicht mit Fig. 3. Der Sockel (1) von Fig. 2 ist fix montiert. Der Sockel (1) hat mit dem Drehteil (2) eine elektromagnetische Funktion und macht somit die kreisförmige Bewegung. Fig. 3 ist am Drehteil von Fig. 2 montiert, und führt somit die Bewegung in Fig. 4, in den Richtungen (L und R) aus. Fig. 3 besteht aus Steuerteil und Strahlruder. So kann Fig. 3, oder das Steuerteil (3), oder das Strahlruder (4) nach Abnützung oder bei Verlust ausgetauscht werden. Fig. 4 zeigt die Schnittdarstellung von Fig. 2 (Sockel und Drehteil) Schnitt B-B.
Fig. 4 beziehungsweise Schnitt B-B zeigt die Leitungen (5) und den Elektromotor (7), wodurch die Energieversorgung über Schleifkontakte auch bei kreisender Bewegung von Sockel (1) zum Drehteil (2) für den Elektromotor vorhanden ist.

Der Lenker (8) ist an dem Elektromotor (7) montiert, und übt die angezeigten Bewegungen elektromechanisch in beiden Pfeilrichtungen (L und R) aus, wie nach erforderlichen Maßnahmen für Fig. 3. Der Elektromotor (7), der Lenker (8), die Augen (9) und Fig. 3 sind 4 mal unter 90 Grad - Teilung vorhanden. Der Haltebogen (6) ist dreimal vorhanden und am Drehteil (2) unter 120 Grad mehrfach montiert. Der Haltebogen hält den Sockel (1) und das Drehteil (2) mit Gleiteigenschaften und Beschichtungen zusammen.

Das elektromagnetische System (10) mit den Bezeichnungen U und Y, führt die kreisende Bewegung aus, wobei die Teile des elektromagnetischen Systems (10) U und Y jeweils am Drehteil (2) und am Sockel (1) montiert sind.

## Patentansprüche

1. Strahltriebwerk für ein Flugzeug, insbesondere für einen Düsenjäger, in Kombination mit einer Schubvektorsteuerung, die anschließend am Auslaß des Triebwerks angeordnet ist, mit vier um den Auslaß verteilten Strahlrudern (4), wobei jedes Strahlruder (4) elektromechanisch um eine Achse winkelverstellbar ist, die senkrecht zur ungehinderten Ausströmungsrichtung der Triebwerksgase ausgerichtet ist, wodurch jedes Strahlruder bei entsprechender Winkelstellung zur Umlenkung der aus dem Triebwerk ausströmenden Gase dient, dadurch gekennzeichnet, daß die winkelverstellbare Befestigung jedes Strahlruders (4) gegenüber dem Triebwerk über einer ringförmigen Trommel (2) erfolgt, die im Anschluß am Auslaß des Triebwerks angeordnet und gegenüber dem Triebwerk elektromagnetisch um eine Achse drehbar ist, die im wesentlichen mit der Längsachse des Auslasses übereinstimmt.

## Claims

1. Jet engine for an aircraft, specifically for a jet fighter, in combination with a thrust vector control arranged contiguously with the engine exhaust and comprising four jet paddles (4) spaced around the exhaust, each said jet paddle (4) being electromechanically adjustable in angular direction about an axis that is perpendicular to the free flow direction of the engine exhaust gases, so that each jet paddle with suitable angular adjustment serves to deflect the exhaust gases exiting the engine, **characterized in that** each jet paddle (4) is adjustably connected in angular direction with the engine by means of an annular drum (2), which is arranged contiguously with the engine exhaust and which is electromagnetically rotatable relative to the engine about an axis substantially coinciding with the longitudinal axis of the exhaust.

## Revendications

1. Moteur à réaction pour un avion, spécifiquement pour un chasseur à réaction, en combinaison avec un pilotage par orientation du vecteur poussée rélié au tuyère d'échappement du moteur, comprenant quatre ailettes de contrôle (4) distribuées autour du tuyère d'échappement, chaque ailette de contrôle (4) étant réglable par électromécanique en direction angulaire autour d'une axe perpendiculaire à la direction d'écoulement non perturbé des gazes d'échappement de manière que chaque ailette de contrôle dûment réglé angulairement sert à la déflection des gazes s'échappant du moteur, **caractérisé en ce que** chaque ailette de contrôle (4) est réliée de manière régable en direction angulaire au moteur au moyen d'un tambour annulaire rélié au tuyère d'échappement du moteur et susceptible d'être tourné par électromagnétisme relative au moteur autour d'un axe sensiblement coincidant avec l'axe longitudinal du tuyère d'échappement.
